# EUROPEAN PATENT APPLICATION

(11) **EP 3 667 572 A1**
(43) Date of publication of application: **17.06.2020**
(21) Application number: 19214309.7
(22) Date of filing: 06.12.2019
(51) Int. Cl.: G06Q 10/00

(54) **A BLOCKCHAIN BASED SYSTEM AND METHOD FOR IMPROVING AIRCRAFT MAINTENANCE SERVICES**

(30) Priority: 10.12.2018 US 201816215119
(71) Applicant: Honeywell International Inc., Morris Plains, NJ 07950 (US)
(72) Inventor: NATHAN, Visvanathan Thanigai, Morris Plains, NJ New Jersey 07950 (US); UMASHANKAR, R Jagadeesh, Morris Plains, NJ New Jersey 07950 (US); PRATAP, Sachin, Morris Plains, NJ New Jersey 07950 (US); KANAGARAJAN, Sivakumar, Morris Plains, NJ New Jersey 07950 (US); VENKATARAMAPPA, Sreenivas, Morris Plains, NJ New Jersey 07950 (US); MANN, Amrit Kaur, Morris Plains, NJ New Jersey 07950 (US)
(74) Representative: LKGlobal UK Ltd.

(57) **Abstract**

A method for administering aircraft maintenance activities including: deploying on one or more devices for permissioned use of an app programmed to implement a blockchain network by receiving instructions of assigning maintenance activities to perform updates or replacements of parts of an aircraft and for part tracking and part verification; implementing a workflow which specifies a process based on time stamp data to assign, check, and ensure that a set of maintenance tasks is completed based on the time stamp data and is validated by rules from the blockchain ledger for the maintenance activity; and implement the set of maintenance tasks comprising: checking, scheduling, sequencing and assigning the set of maintenance tasks with time stamp data to maintenance personnel wherein each maintenance task is performed in a sequence of an order of execution and assignment of a start and end time for each maintenance task.

## Description

### TECHNICAL FIELD

Embodiments of the subject matter described herein relate generally to aviation management systems for aircraft maintenance, and more particularly, embodiments of the subject matter relate to a system and method for automated checks of a sequence and an activity for an aircraft maintenance assigned by a Blockchain Network using an app with deployable instructions and workflows to both internal and external entities in an aircraft maintenance network.

### BACKGROUND

The aviation maintenance management process is a highly regulated, safety critical and complex set of procedures. This is because the aviation and aerospace industries is characterized by complex decentralized workflows which are distributed among multiple organizations with stringent regulatory requirements due to the size and impact played by the industry in the consumer, commercial and military industries. The aircraft manufacturers spend significant time and resources in putting together maintenance plans to increase customer satisfaction and longevity of the aircraft. The aircraft manufacturers in general use a methodical and structured process to devise maintenance plans. Often, the maintenance plans are formulated using a top down methodology where maintenance plans are devised at the onset of an aircraft operation or delivery. At this time, a maintenance plan is communicated to the commercial carrier or other carriers with scheduled maintenance activities based on time intervals or flight hours, and for each maintenance activity (i.e. such as a part update or replacement) there is defined a sequence of tasks to meet the compliance and validation requirements.

The use of predictive applications in maintenance activities may allow for proactive and flexible monitoring for the replacement of parts prior to a part failure based on an analysis of part data (i.e. actual part use) and not based on time intervals or flight hours in maintenance plans. In addition, the predictive maintenance data can also be available for use in configuring the order of tasks of a maintenance activity.

Hence, it is desirable to use predictive analysis of part data for efficiently checking maintenance activities instead of having to perform planned maintenance activities according to a maintenance schedule.

In addition, it is desirable for improving both the performance and robustness of the maintenance activity by using an app to enable a fully/semi-automated process for checking, scheduling, and assigning maintenance activities with time stamps from a Blockchain Network to ensure proper validation and compliance in performance by maintenance personnel of each maintenance activity. Furthermore, other desirable features and characteristics will become apparent from the subsequent detailed description and the appended claims, taken in conjunction with the accompanying drawings and the foregoing technical field and background.

### BRIEF SUMMARY

Some embodiments of the present disclosure provide a method and system for certifying, updating, and validating various activities from a Blockchain Network based on time stamps in an aircraft maintenance process.

In one embodiment, a blockchain network system for administering aircraft maintenance operations by managing replacement parts and updates to parts on an in-service aircraft using a blockchain ledger is provided. The system includes: at least one processor deployed on one or more devices which include: a computing device, a server and an in-cockpit avionics, the one or more devices configured for permissioned use of an app programmed to implement a blockchain network by receiving instructions of assigning maintenance activities to perform updates or replacements of parts of an aircraft and for part tracking and part verification wherein the app is configured in-communication with the blockchain network, the computing device, the server and the in-cockpit avionics; the at least one processor, instructed by a controller based on communications from the app, to implement at least one deployable workflow assigned by a blockchain ledger record which specifies a process based on time stamp data to assign, check, and ensure that a set of maintenance tasks is completed in accordance with a scheduled time and a sequence with an order based on the time stamp data and is validated by rules from the blockchain ledger for a maintenance activity; the at least one processor, instructed by the controller based on communications from the app, to implement the set of maintenance tasks comprising: checking, scheduling, sequencing and assigning the set of maintenance tasks with time stamp data to maintenance personnel wherein each maintenance task is performed in a sequence of an order of execution and assignment of a start and end time for each maintenance task in accordance with time stamp data from the blockchain ledger; the at least one processor, instructed by the controller based on communications from the app to generate requests to the blockchain ledger of the maintenance activity to check for a completeness of maintenance tasks, updates to a part record, or to predict a next maintenance check; and the at least one processor employing the time stamp data from the blockchain ledger for managing notifications of updates and replacements of parts to maintenance personnel using the app.

In various embodiments, the system further includes: a notice of a return to service for an aircraft is received by the app after completing of maintenance checks. The system further includes: a set of rules of the blockchain ledger to regulate the maintenance activity and to enable ground personnel by use of the app configured in accordance with the set of rules to administer the maintenance activity and enable a record of validation. The record of validation is stored in the blockchain ledger. The maintenance personnel comprise: at least one or more of a set of agents for accessing the Blockchain Network of: a repository, an aircraft server, a maintenance mechanic, an inspector, a maintenance facility, an aircraft owner, an OEM, and a regulator. The system, further includes: an activity engine of the app for scheduling tasks for the maintenance activity assigned by the blockchain network wherein the maintenance tasks include: checking updates to parts or validating part replacements. The system further includes: the blockchain ledger outputting a record of a next maintenance activity based at least on the time stamp data.

In another embodiment, a system implementing a Blockchain Network for distributing at least maintenance information related to an aircraft service is provided. The system includes: a plurality of computer devices permissioned to participate in the Blockchain Network and to interconnect amongst each other to perform a series of actions at least including: assigning, checking and ordering maintenance activities associated from instructions from the Blockchain Network; an app hosted by at least one of the computer devices configured to communicate with the Blockchain Network wherein the computer devices include: a mobile device, a server and an in-cockpit avionics wherein the app is programmed to implement information from ledger records of the blockchain network containing instructions to assign maintenance activities, to perform updates and to perform replacements of parts of an aircraft with maintenance activities of part tracking and part verification; the app hosted by the computer device configured to implement at least one deployable workflow assigned by the information of the ledger record which specifies a process based on time stamp data to assign, check, and ensure that a set of maintenance tasks is completed in accordance with a scheduled time and a sequence of an order based on the time stamp data and is validated by rules from the ledger record; the app hosted by the computer device is configured to implement the set of maintenance tasks including: checking, scheduling, sequencing and assigning the set of maintenance tasks with time stamp data to maintenance personnel wherein each maintenance task is performed in a sequence of an order of execution and assignment of a start and end time for each maintenance task in accordance with time stamp data from the blockchain ledger; the app hosted by the computer device is configured to generate requests to the blockchain ledger of the maintenance activity to check for a completeness of maintenance tasks, updates to a part record, or to predict a next maintenance check; and the app hosted by the computer device is configured to manage the time stamp data from the blockchain ledger for notifications of updates and replacements of parts.

The system, further includes: a notice of a return to service for an aircraft is received by the app after completing of maintenance checks. The system, further includes: a set of rules of the blockchain ledger to regulate the maintenance activity and to enable ground personnel by use of the app configured in accordance with the set of rules to administer the maintenance activity and enable a record of validation. The record of validation is stored in the blockchain ledger. The system, further includes: a set of maintenance tasks, deployed within the Blockchain Network by an activity engine, for at least each scheduled maintenance activity which include: a loading of loadable software aircraft parts (LSAP) with multiple tasks associated with each maintenance procedure. The maintenance personnel include: at least one or more of a set of agents for accessing the Blockchain Network of: a repository, an aircraft server, a maintenance mechanic, an inspector, a maintenance facility, an aircraft owner, an OEM, and a regulator. The system, further includes: an activity engine of the app for scheduling tasks for the maintenance activity assigned by the blockchain network wherein the maintenance tasks include: checking updates to parts or validating part replacements. The system, further includes: the blockchain ledger outputting a record of a next maintenance activity based at least on the time stamp data.

In yet another embodiment, a method for administering aircraft maintenance activities by managing replacement parts and updates to parts on an in-service aircraft using a blockchain ledger in a blockchain network is provided. The method includes: deploying on one or more devices which comprise: a computing device, a server and an in-cockpit avionics, the one or more devices configured for permissioned use of an app programmed to implement a blockchain network by receiving instructions of assigning maintenance activities to perform updates or replacements of parts of an aircraft and for part tracking and part verification wherein the app is configured in-communication with the blockchain network, the computing device, the server and the in-cockpit avionics; instructing by a controller based on communications from the app, to implement at least one deployable workflow assigned by a blockchain ledger record which specifies a process based on time stamp data to assign, check, and ensure that a set of maintenance tasks is completed in accordance with a scheduled time and a sequence with an order based on the time stamp data and is validated by rules from the blockchain ledger for the maintenance activity; instructing by the controller based on communications from the app, to implement the set of maintenance tasks including: checking, scheduling, sequencing and assigning the set of maintenance tasks with time stamp data to maintenance personnel wherein each maintenance task is performed in a sequence of an order of execution and assignment of a start and end time for each maintenance task in accordance with time stamp data from the blockchain ledger; instructing by the controller based on communications from the app to generate requests to the blockchain ledger of the maintenance activity to check for a completeness of maintenance tasks, updates to a part record, or to predict a next maintenance check; and employing the time stamp data from the blockchain ledger for managing notifications of updates and replacements of parts to maintenance personnel using the app.

The method, further including: sending a notice of a return to service for an aircraft after completeness of maintenance checks. The method, further including: executing a set of rules of the blockchain ledger to regulate the maintenance activity and to enable ground personnel by use of the app configured in accordance with the set of rules to administer the maintenance activity and enable a record of validation. The record of validation is stored in the blockchain ledger. The method, further including: deploying, within the Blockchain Network by an activity engine , a set of maintenance tasks for at least each scheduled maintenance activity which include: a loading of loadable software aircraft parts (LSAP) with multiple tasks associated with each maintenance procedure.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 illustrates an exemplary maintenance workflow diagram 100 of an app connected to a Blockchain Network for checking maintenance activities assigned to various personnel for aircraft maintenance based on time-stamped activities in accordance with an embodiment;
FIG. 2 illustrates a diagram of an application for processing checks of scheduled activities, sequence/order of activities, assignment of activities with time stamps of the aircraft for use with the blockchain maintenance network in accordance with an embodiment;
FIG. 3 illustrates a diagram of an application for processing checks of scheduled activities, sequence/order of activities, assignment of activities with time stamps of the aircraft for use with the blockchain maintenance network in accordance with an embodiment;
FIG. 4 is a diagram that illustrates output from the maintenance system using the Blockchain Network in accordance with an embodiment;
FIG. 5 illustrates a diagram of the various entities for orchestrating a maintenance activity in the Blockchain Network, in accordance with an embodiment;
FIG. 6 illustrates an exemplary maintenance workflow diagram of a Blockchain Network of orchestrated activities distributed about multiple entities of a maintenance workflow in accordance with an embodiment;
FIGS.7A and 7B illustrate a maintenance activity of a part (i.e. LSAP) loading in a deployable Blockchain Network of orchestrated activities of multiple organizations for generating checking and validation data to store in the blockchain ledger of the Blockchain Network in accordance with an embodiment;
FIG. 8 illustrates a flowchart 800 for the maintenance workflow of activities assigned by a Blockchain Network in accordance with an embodiment;
FIG. 9 is a network diagram of the Blockchain ledger with the communication network aircraft related to the orchestrated activities for generating data of the Blockchain Network in accordance with an embodiment; and
FIG. 10 is a functional block diagram of a computing device related to the client for the orchestrated activities for generating data of the Blockchain Network in accordance with an embodiment.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The maintenance process of an aircraft is performed by a complex interdependent system of organizations and personnel that are tasked with technical and legally binding activities to ensure all required maintenance steps are performed. Signing off on documentation to create paper trails to ensure proper compliance and to enable auditing of records in each step of the process by various parties in the network is required to ensure validations, reliability, efficiency and safety at all times. Thus, aircraft maintenance activity requires a sustained coordination, communication and cooperation between different work groups including in the network of: aircraft maintenance engineers (AMEs), crew managers, inspectors and hangar managers; external bodies, such as the regulators, the manufacturer; the customer and the airlines; and various other support systems such as planning and commercial, stores, quality and engineering that proves difficult to reliably coordinate manually.

In addition, the volumes of documentation associated with maintenance, repair, and overhaul organizations (MROs) can compound the problem. Where each aircraft must be maintained by maintenance documentation specific to the aircraft owner and registry number. This entails that an MRO is likely to have multiple different work instructions for each aircraft in the shop, even though the aircraft are of the same type. This requires that air carrier/airline operators supplement the manufacturer's manuals with company specific instructions, checklists, job cards, and other company customized documenting and reporting material. For example, to accomplish such tasks, some companies may use computer-based maintenance documents with varying degrees of user friendliness because of having to add-on or customize systems not already configured with the necessary custom feature sets for these tasks.

A multitude of deficiencies can result by use of an unreliable and error prone maintenance process where a correct sequence and proper validation of each step of an activity for the maintenance is not always properly followed. Thus, building an efficient automated aircraft maintenance workflow for checking tasks and validating activities particularly for the activities of monitoring and replacing parts in an aircraft, can cut across the organization boundaries and prevent errors in step order and also missing checks for each maintenance activity that is performed.

Also, maintenance activity schedules and plans are of importance for aircraft in the aviation industry not only because of a need for compliance and safety issues but also because of the costs associated with each activity. With respect to the last item of costs, manufacturers have compliance and safety constraints when attempting to reduce maintenance costs for an aircraft. As a result, the maintenance plan formulated at the onset of an aircraft delivery, requires the manufacturer to make forced assumptions which results in a maintenance schedule of activities that are inefficient. As an example, a maintenance activity may be scheduled more often than is actually needed to overcome missed inspections of parts needing replacement after a certain number of flight hours or an in between repair between maintenances may be needed in response to unforeseen part failures that could or should of been replaced earlier at a scheduled maintenance activity.

In various exemplary embodiments, a Blockchain network may be used in the maintenance activities and refers to software platform service layer, whose core attributes are based on a detectable distributed ledger, which allows deployment on mobile devices, desktops, the cloud for connectivity's to underlying service processes beneath for example a service stack. The Blockchain Network may include an prediction engine that is configured with Deployable certified Validation Instructions sets to enable workflow automation. The Deployable Workflows is supported by Tools sets To create both deployable Instructions and deployable workflows for Network Administration, Roles Management, Authentication services, Archival Interfaces and Interfaces to Customer databases.

In the past, numerous missteps have been found when complying with procedures and regulations for aircraft maintenance activities by the related various entities use of aviation documentation in an aircraft maintenance network. For example, often technicians make minor errors in simple steps of an activity associated with filling out and use of documentation for certifying maintenance repairs as well as failing to follow properly written procedures as is often reported in aircraft accident reports by the National Transportation Safety Board (NTSB). In addition, various FAA studies focused on major malfunctions also highlight this issue. In an exemplary example of such a study, the failure to comply with maintenance documentation was the number one reason for aircraft malfunction. The rationale put forth was given the huge amount of paper-based documentation required to comply with maintenance procedures, there can be found a high probability that the maintenance history for an aircraft will or may not be complete, as often is the case that not all relevant or correct documents can be found.

The use of an app configured for checking, scheduling, sequencing and assigning activities by time stamps from a Blockchain Network can alleviate failures caused by paper-based documentation and still ensure proper validation and compliance of each maintenance activity by maintenance personnel.

In various exemplary embodiments, the present disclosure describes a blockchain network that enables a distributed system and methodology across various organizations (e.g. inter/intra maintenance related entities) which enables review and acceptance which is spread out in multiple locations.

In various exemplary embodiments, the present disclosure describes systems and methods of an automated process via an app of a proof of compliance of completion of the work element as per established safety rules/procedures. By using an app the compliance requirements of maintaining multiple copies as per regulatory authorities can be obviated. In addition, the automated functionalities of the app can prevent the referencing of wrong documents (e.g. picking an older Service bulletin which have been superseded by updated or new documentation) by the maintenance personnel.

In various exemplary embodiments, the present disclosure describes systems and methods of a Certifiable Workflow Automation process. In various exemplary embodiments, the present disclosure describes: a private permissioned Blockchain Network, a set of configurable Network rules within the Blockchain Network to enable a set of deployable workflow maintenance activities based on trusted elements like Service bulletins, a set of task transactions based on the workflow maintenance activities, which ensure an automated tamper proof record generation of a maintenance event of the maintenance contract, and an associated sequence of maintenance task.

The present disclosure provides methods and systems to reduce maintenance time, reduced effort in servicing and safety monitoring, and increased airborne time; increase in the aircraft availability for flights and increase their revenue; reduce the on-ground time of the aircraft; and increase the aircraft availability for passenger, cargo and military missions. In addition, the current manual labor oriented maintenance servicing requires a higher down-time and implementing a Blockchain oriented digital ledger will reduce the down-time.

The present disclosure provides methods and systems to identify a critical path, sequence and parallel operations to assign, and to monitor through a Blockchain Network using an app to ensure that all technical maintenance actions are performed in a correct order of a maintenance activity.

In various exemplary embodiments, the present disclosure provides systems and methods so that the maintenance services can be recorded and validated on a mobile device by an app and can provide on-demand instruction, monitoring and compliance by multiple levels required in the aviation industry.

In various embodiments, the present disclosure provides systems and methods that can be deployed through aviation systems such as the flight management system (FMS) where a maintenance activity can be modified by adding tasks and organizing the sequence of maintenance tasks for communication in an app of a mobile device, or a server or a combination thereof of the maintenance activity.

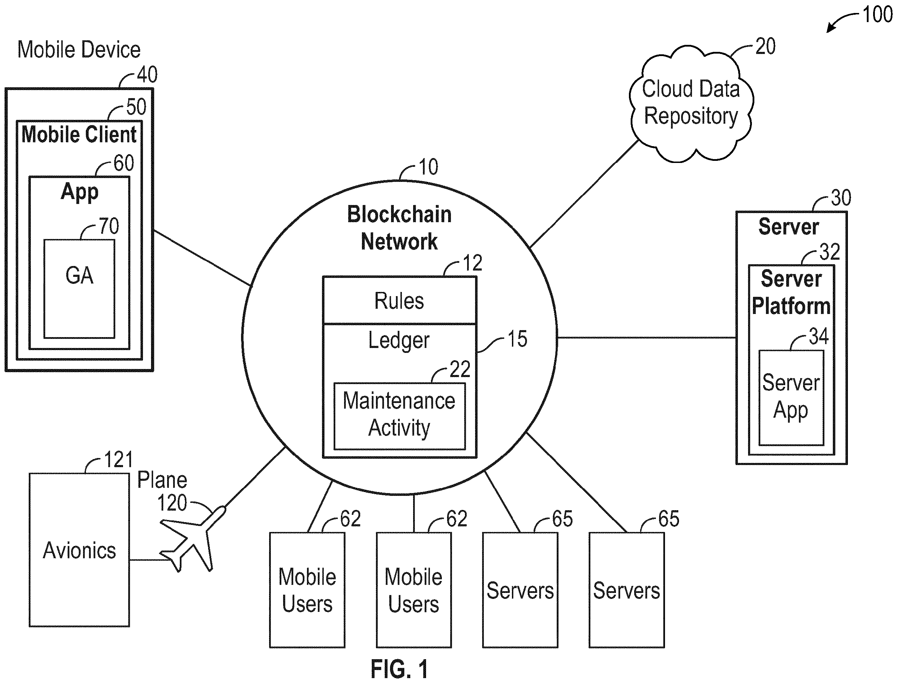

FIG. 1 illustrates an exemplary maintenance workflow diagram 100 of an app connected to a Blockchain Network for checking maintenance activities assigned to various personnel for aircraft maintenance based on time-stamped activities in accordance with an embodiment. In FIG. 1, the exemplary maintenance workflow diagram 100 shows orchestrated maintenance related activities distributed across multiple organizations. In FIG. 1, a maintenance workflow diagram 100 includes a Blockchain Network 10 coupled to a mobile device 40, a server 30, a cloud data repository 20, other mobile devices 62 and servers 65.

In an exemplary embodiment, a maintenance activity 22 is configured in a Blockchain Network by a set of rules 12 and maintenance data and maintenance tasks stored in a blockchain digital ledger 15. That is, an on-demand "app" 60 is connected through the cloud or integrated in an application on an on-board avionics system such as the FMS (or for that matter integrated in a replacement avionic part). The aircraft flying hours, the activities of the checks and dependency among these checks are stored in the digital ledger 15 of the Blockchain Network 10. For example, the checks can be configured as rules 12 for executing a maintenance activity 22. Based on the list of activities for a particular maintenance plan, a sequence of maintenance activities 22 is sent (from the Blockchain Network 10) to the mobile device 40 for display to the user by use of the app 60 of the mobile client 50. The sequence and the critical path of the activity is provided by an order of execution and assignment to maintenance engineers with a time of start and end. This information is stored in a digital ledger of the Blockchain Network and the ledger maintenance activity can be checked by individual maintenance engineer. This process will ensure the completeness of all checks for each activity and the execution of the checks in a right order for each activity to allow for proper validation and compliance.

In various exemplary embodiments, the data stored in the cloud data repository 20 may be generated by the following entities, without limitation: data sensed by various sensors of the aircraft, data identified by the use of the app 60 on the mobile device 40 related to the maintenance activity 22, and data derived from metadata particularly generated in conjunction with the aircraft 120 operation. While the use of sensors 121 of the aircraft 120 is one mode of generating associated data, other modes of data generation and other tools to generate the data may be employed and configured with the app 60 and the Blockchain Network 10 for the maintenance process.

For example, the data may be derived as follows: by machine data from operations of the aircraft 120. Additionally, the server 30 may include a server platform 32 with a server application 34 configured to be connected to the app 60 for enabling control of step by step instructions on a graphic user interface 70 as assigned by time stamps from the Blockchain Network 10 of the app 60 and collecting validating data of each step performed in response to the assigned maintenance activity 22 of the digital ledger 15 of the Blockchain Network 10.

In an exemplary embodiment, the app 60 of maintenance workflow diagram 100 receives a maintenance activity 22 of an original equipment manufacturer (OEM)/supplemental type certificate (STC) release service bulletins for the maintenance activity 22 of loading and installing LSAPs assigned by tasks in the digital ledger 15. The service bulletins (i.e. information sent to the app 60) may include the following information: the aircraft and hardware applicability, the verification procedures to assure that the software were correctly loaded into an approved and compatible target computers; any post load verification and/or test procedures required to show compliance with the guidelines specified in this section of the Certification Memorandum; the actions to be taken in the event of an unsuccessful load (for example, to prohibit the dispatch of the aircraft); the reference to an approved loading procedure. In addition, in the graphic user interface (GUI) 70 a digital maintenance record 75 may be configured for entry procedure and validation of each assigned task. Also, in the GUI there may be instructions and references from a Aircraft Flight Manual or Operations Manual of the aircraft, to assist the maintenance personnel in completion of the maintenance activity 22.

The Table 1.0 below describes various benefits in exemplary embodiments described by converting written instruments of service bulletins to digital documents to facilitate a maintenance activity 22 of a software upgrade in aircraft described by the service bulletins as well to maintain integrity with software updates when installed in the aircraft systems.

| Problem Area | Exemplary Embodiments Described |
|---|---|
| Service Bulletin comes as documents which are assimilated by Operator change management team. Assess applicability and constraints for their fleet. | SB is encoded as the executable code(smart contract) in the BC network. Assessment of the applicability is automatically determined by the network |
| Onboard Manual Software upgrades some of which take long time (sometimes >1 hour). Authorized Maintainers carry the software parts to the aircraft. Download the Software as per the instructions in the service bulletin. This is constrained by geographies and authorized maintainers. | Maintenance node takes care of securely loading of LSAPs. The successful completion of this task is endorsed by the participating nodes in the network using the app. |
| Onboard Manual Inspections which requires authorized/certified and independent inspection. Authorized Maintainers verify if the software parts has been upgraded authorized for the specified aircraft. This is constrained by geographies and authorized maintainers, where different laws applies. | This step is not required. Endorsements by the participating nodes in the app ensure the verification. |
| Maintaining consistent tamper proof Aircraft records updates for the entire life cycle of the aircraft. Most commonly manual updates to the paper records is used. Managing consistently the integrity of the records without losing these for long durations is a problem. | Auto generated digital distributed ledger. Collaboration by the app without compromising on proprietary systems |

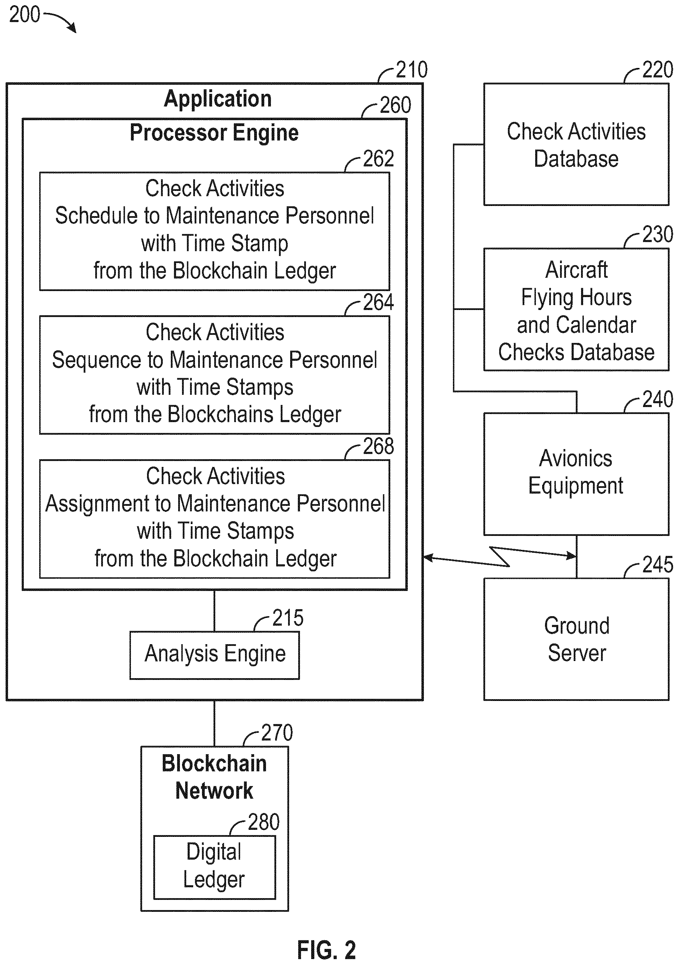

FIG. 2 illustrates a diagram 200 of an application for processing checks of scheduled activities, sequence/order of activities, assignment of activities with time stamps of the aircraft for use with the blockchain maintenance network in accordance with an embodiment. The application (hereinafter "app") 210 may be configured (i.e. its processing and analysis parts) in a number of ways to reside in part on a mobile device or a server or in the cloud and is coupled to the avionics equipment 240 or ground server 245 to collect usage data for maintenance of the aircraft by accessing a database of aircraft activities 220 to check activities of the aircraft and by checking aircraft flying hours and a calendar checking from a flying hours/calendar database 230. The app 210 may include or be coupled to an analysis engine 215 and processing engine (i.e. orchestrator) 260 for checking the activities, the schedules, sequences and the assignments given to aircraft personnel with time stamps from the blockchain Network 270 stored in the digital ledger 280. In various embodiments, the activities are checked in a schedule to a maintenance personnel performing the activity in accordance with a time stamp from the Blockchain Ledger at 262. That is each activity performed by a maintenance personnel should be performed to a corresponding time stamp. Next, at 264, the maintenance activities are checked in an order in accordance with time stamps of a Blockchain ledger. At 268, the activities when assigned to maintenance personnel are checked by time stamps to ensure that the assignment orders are correct. The analysis engine 250 may use various algorithmic solutions, more specifically algorithms to identify tasks for compliance with activities by a schedule, a given sequence or order, and assignment by the time stamp data from the blockchain ledger.

In various exemplary embodiments, the analysis engine 250 may re-configure the assigned tasks, order or schedule of the activity performed by time stamps to ensure that the assigned activity from the Blockchain Network 270 are completed in compliance. Also, a set of maintenance activity tasks that were previously defined based on the aircraft flight hours, forecasted usage, time and other attributes at the onset of the aircraft operation in a top down modeling, as a result of applications by the analysis engine 250 may now be associated differently with particular activities in the maintenance plan which have been redefined by a different schedule, assignment, or order of tasks.

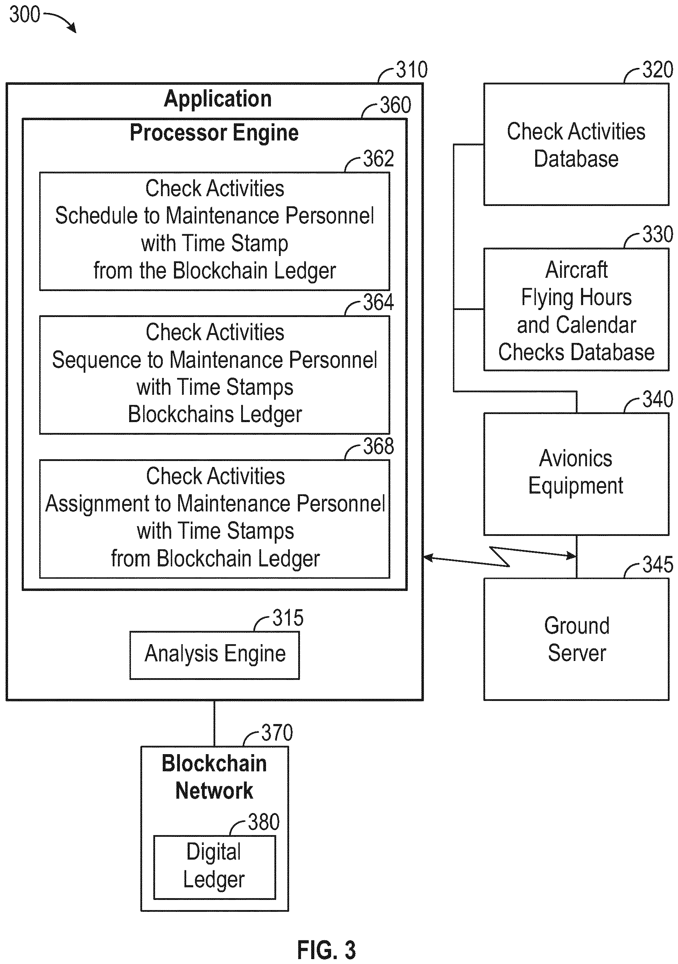

FIG. 3 illustrates a diagram 300 of an application for processing checks of scheduled activities, sequence/order of activities, assignment of activities with time stamps of the aircraft for use with the blockchain maintenance network in accordance with an embodiment. The application 310 (hereinafter "app") is coupled to the avionics equipment 340 or the ground server 345 to collect data of activities, status and completion of scheduled activities from the avionics equipment 340 or from a ground server 345, and status of assigned activities for time stamping and receipt by the Blockchain Network 370 stored in the digital ledger 380. In various embodiments, the activities are checked in a schedule to a maintenance personnel performing the activity in accordance with a time stamp from the Blockchain Ledger at 362. That is each activity performed by a maintenance personnel should be performed to a corresponding time stamp. Next, at 364, the maintenance activities are checked in an order in accordance with time stamps of a Blockchain ledger. At 368, the activities when assigned to maintenance personnel are checked by time stamps to ensure that the assignment orders are correct. The usage data for maintenance of the aircraft is output and added to the data of a database of aircraft activities 320 which is used to check activities and to store historical data of the aircraft and to update the checks with the aircraft flying hours. In addition to the updates, calendar checks are performed for the maintenance activity dates 330. In other words, the ledger data can be fed into the ground server 345 and processed to ensure the maintenance activities are in compliance and are completed for monitoring purpose. The exact number of activities completed and their authenticity can also be monitored with ease. This app solution will also be applicable to any vehicle maintenance and to all aviation market segments like Air Transport (AT) or Business, Regional or General Aviation, (BGA).

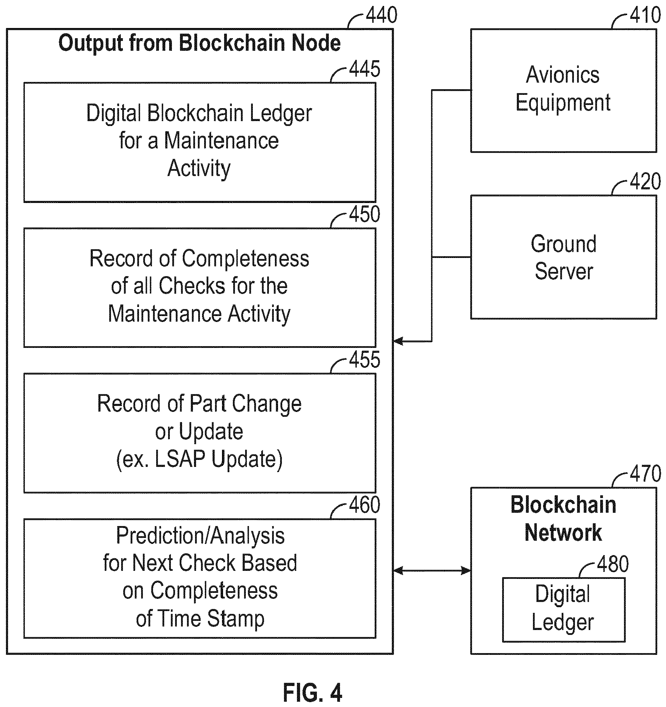

FIG. 4 is a diagram 400 that illustrates output from the maintenance system using the Blockchain Network in accordance with an embodiment. In FIG. 4, the avionics equipment 410 sends data or the ground server 420 sends data to the Blockchain Network 470 (i.e. a node) to be stored in the digital ledger 480. The output 440 includes identifying the blockchain ledger 445 for the maintenance activity, a record of the completeness 450 of all checks for the maintenance activity, a record 455 of a replacement part or an update, and a prediction or analysis 460 for the next check based on the completeness and time stamp data processed. The last step for predicting when a next maintenance check is due can reduce efforts required by maintenance personnel by using a software solution to determine when the next maintenance check is to be done.

In an exemplary embodiment, the Blockchain Network 470 can output 440 a regulatory record based on a software solution which can be updated by multiple parties that validate proposed activities, perform proposed activities and certify or validate performance of the activities in an aircraft maintenance in the work flow required for compliance. In an exemplary embodiment, the regulatory record may include a proposed repair or update of aircraft parts. In addition, since the regulatory record is an electronic record, there is no need for duplicates or retain multiple copies for communication and notice to each respective entity or party in the maintenance workflow. In other words, a regulatory record is configured with electronic recorded signature validation of checks of multiple entities for recordation, for evidence proof of compliance and for retaining for internal and external (i.e. regulatory agencies) auditing for compliance with aircraft maintenance procedures.

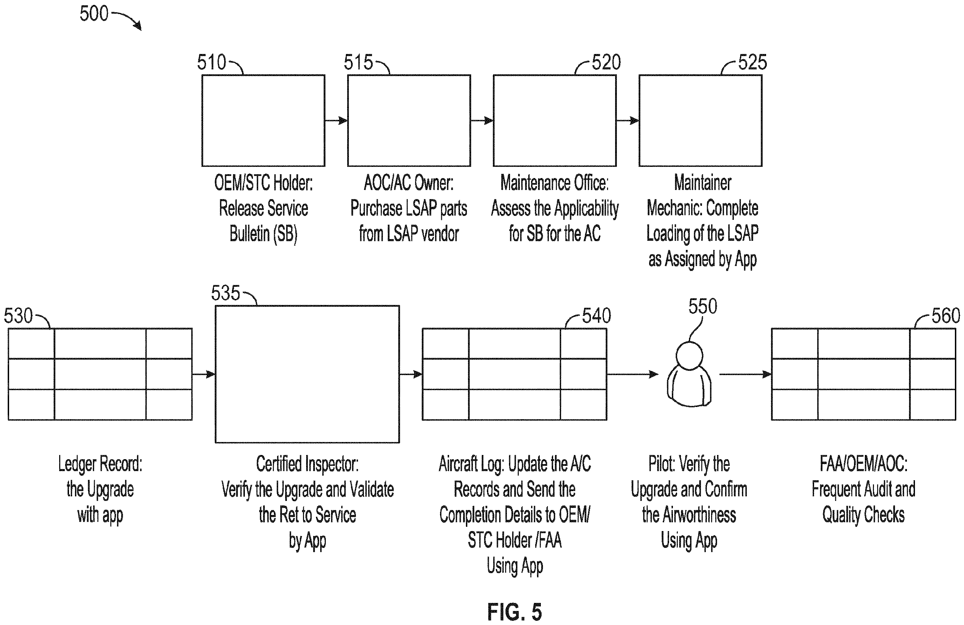

FIG. 5 illustrates a diagram 500 of the various entities for orchestrating a maintenance activity in the Blockchain Network, in accordance with an embodiment. The air operator certificate (AOC)/Owner at 515 after the notification from the information of the service bulletin(SB) at 510 from an OEM/STC holder, may order, via the Blockchain Network, both the software and hardware part numbers that stipulate which software update is to be loaded into the loadable software parts and loadable hardware (LRU). For an airline to operate and maintain an aircraft having these loadable systems/software, in various exemplary examples, the following processes should be implemented and recorded with time stamps in the Blockchain Ledger for a maintenance activity as follows: a procurement of Loadable software parts and Loadable (LRU) is required which involves ordering loadable software Parts and relevant LRUs from an original equipment manufacturer (OEM) by listing out the software parts to be loaded into the LRU. Also needed are Software Libraries Management: airline operators require a well-established and maintained software library, for maintaining Loadable software parts spares and updated software as a part requiring a software changes can happen without notice. Also needed, is a preload Loadable Software Parts into Loadable LRU of the Aircraft: When a loadable LRU is replaced, the Loadable software certified for the Aircraft should be loaded into the incoming LRU. The operator can achieve this by requesting suppliers to perform the same or by performing in their own maintenance shops using shop loading equipment and send the requests to the Blockchain Network for assignment. Finally, a conformance of Loadable Software Configuration with Authorized Aircraft Configuration: This requires the operator access records via the Blockchain of all the loadable software parts available in an Aircraft and its conformance with the approved Aircraft configuration. Such a process should also ensure that, all the changes undergone for loadable software parts arising out of the Service Bulletin are recorded with time stamps in the Blockchain ledger and readily available for any regularity authority inspections and check.

That said, the Airline Operator is the responsible entity for implementing procedures of checks to control updates and modifications to loadable systems, occurring after the airplane has been delivered. These checks can be stored in the Blockchain ledger. The part numbers of the software loaded into a loadable system are part of the type certificate of the airplane. The operator can ensure that the configuration control documentation for each airplane reflects the current configuration of loadable software parts, and that the loadable software parts are certified for the airplane on which the updates are installed using the app and time based records of certification in the Blockchain ledger.

At 520, the maintenance office may assess the applicability for the SB for the air certificate (AC) and this action can be recorded with a time stamp in the ledger. At 525, in an exemplary embodiment, a mechanic can complete the loading of the LSAP assigned by the App. Next, at 530 the aircraft log records the upgrade with a time stamp. Here, inadequate records have been a constant problem identified by FAA resulting in operators spending substantial money to keep the records up to date. Like any parts on the aircraft, records (with time stamps) have to be maintained for LSAP installation to meet the stringent safety requirements imposed in the industry.

The records are needed to match the actual aircraft configuration and there should be no discernable configuration discrepancies to ensure the operator will get the necessary AC without obstacles. At 535, the certified inspector(s) may check the upgrade and electronically certify a return to service notice using the app on a mobile device. In order to mitigate risk to network security of the onboard systems of the aircraft, the off-airport supporting infrastructure and links in between must include wired and wireless connectivity to ensure no public or unauthorized access. This ensures that data security protection is sufficient to prevent access by unauthorized devices or personnel external to the aircraft to the app. Additionally, the wired and wireless connected pipeline ensures that security threats specific to the certificate holder's operations are identified and assessed, and that risk mitigation strategies are implemented to ensure the continued airworthiness of the aircraft. That is, steps are taken to prevent inadvertent or malicious changes to the aircraft network, including those possibly caused by maintenance activity. Also, unauthorized access from sources onboard the aircraft is also prevented by this wired and wireless connected architecture. Next, at 550, the pilot checks and verifies using the app the upgrade and confirms airworthiness. Finally, at 560 the FAA/OEM/AC frequently audit and quality check the records stored in the digital ledger to ensure that the aircraft meets the proper requirements.

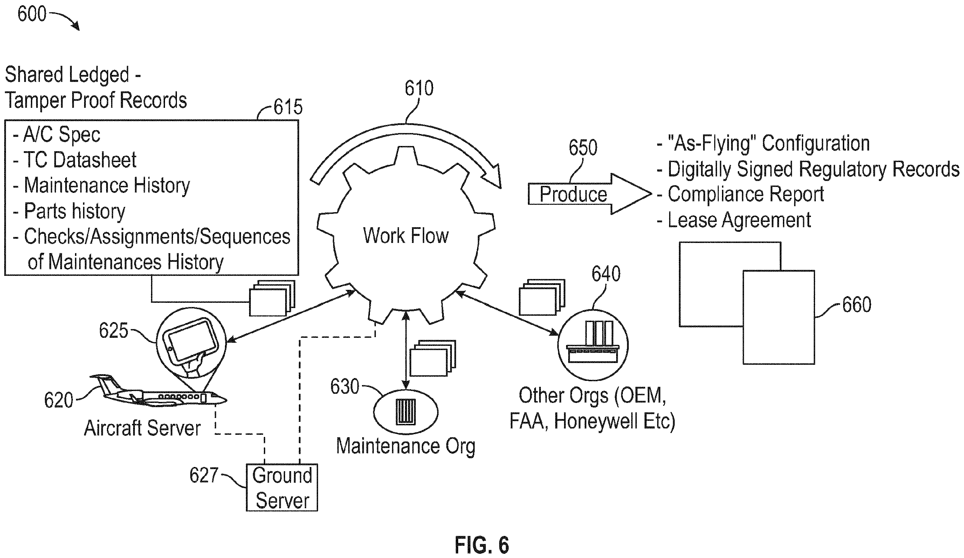

FIG. 6 illustrates an exemplary maintenance workflow diagram of a Blockchain Network of orchestrated activities distributed about multiple entities of a maintenance workflow in accordance with an embodiment. Each entity in the blockchain network 600 will have one or more specific roles in the network to receive the record data into the network, validating the record data, generating data blocks of static data in the block chain ledger, and certifying the record data. FIG. 6 illustrates a connectivity of a Blockchain Network 600 in binding various parties and elements into an interdependent or symbiotic relationship when performing aircraft maintenance procedure to enable an automated workflow between each party and element. In various exemplary embodiments, the Blockchain Network 600 integrates all aspects associated with the maintenance workflow starting with a maintenance worker tool set to certifying and validating steps of intra/inter organizations within the network.

In various exemplary embodiments, in FIG. 6 a core mechanism and set of attributes of the workflow maintenance process can be described as follows: a Blockchain Network 600 enabled to orchestrate and/or deploy with time stamps a complex set of work procedures relating to performing maintenance tasks which can be distributed across specialized a set of network entities designated as trusted agents. The trusted agents have permissioned capabilities for interacting with manual/automated applications of the network. The trusted Agents for example may include organizations 640 and users of the servers 620. The trusted agents will have established trustworthy digital identity as requirement to participate in the Blockchain Network 600. The trusted agents may also include automated applications hosted by ground servers 627 or mobile devices on onboard systems in an aircraft that enable machine to machine communications, operators of portable devices 625 or applications/users associated with ground servers 627. The deployable flow may be considered an orchestration and a deployment of a set of parallel and dependent activities of complex workflows which have been established using activity tokens. The workflows can be spread across multiple inter/intra organizations. In an exemplary embodiment, this may entail the remote data loading of LSAP (Loadable Software Airplane Parts). The deployable rules of the Blockchain Network 600 can be established by authorized rules deployed in the specialized network, which can verify the outcome of the activities accomplished by the trusted agents. For example, a set of rules are of similar content to information found in a service bulletin which is typically a set of work instructions written in text and interpreted by a technician to verify for example a cyclic redundancy check (CRC) of a particular LSAP.

The review agents are agents that review the outcome of the activities is verified by participating review agents (via the app) based on review agent consensus. In an exemplary embodiment, review agents may be considered inspectors of a maintenance organization 630 who match the task outcome with the information in a service bulletin. The Tamper Proof Records 615: the outcome of the reviewed activity is stored in the shared distributed ledger. An Up-to-date Compliance 650 of compliance records 660 can be generated anytime in the digital format with appropriate digital signatures retrieved from the distributed ledger. The Tools: The deployable machine readable (analysis engine) work activities are prepared using offline specialized tools.

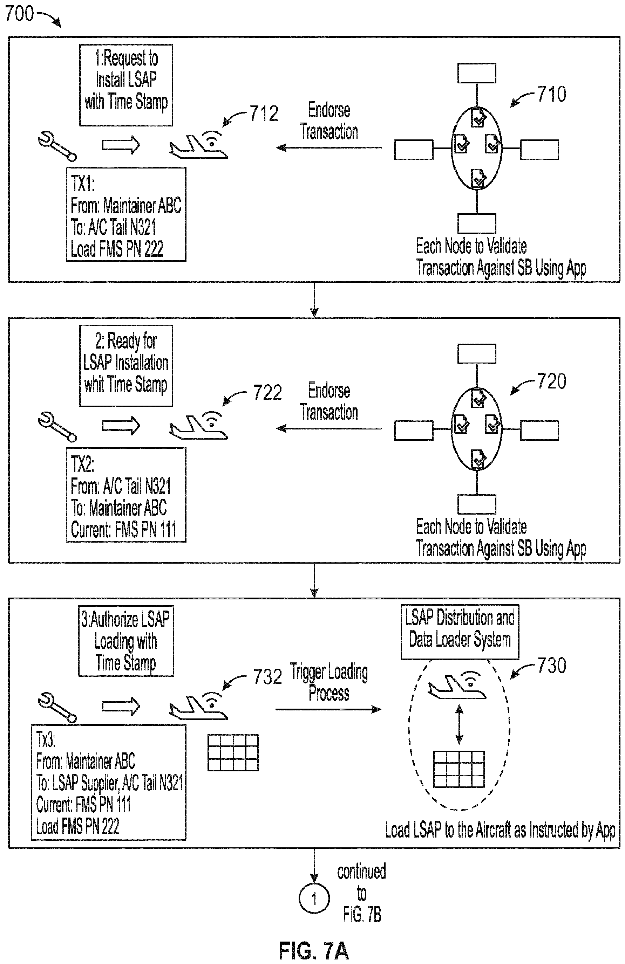

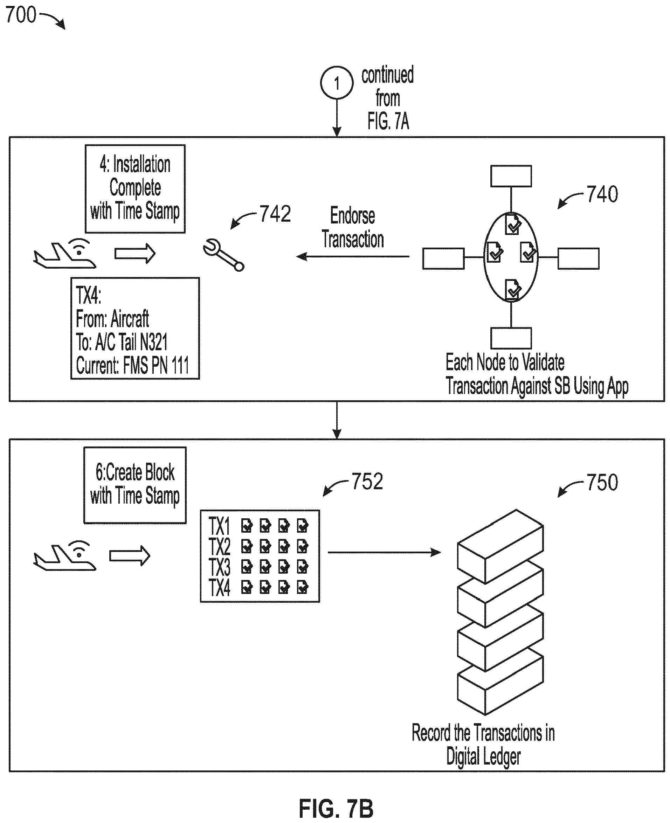

FIGS.7A and 7B illustrate a maintenance activity of a part (i.e. LSAP) loading in a deployable Blockchain Network of orchestrated activities of multiple organizations for generating checking and validation data to store in the blockchain ledger of the Blockchain Network in accordance with an embodiment. FIGS. 7A and 7B show a work flow diagram 700 of configurable set of network rules implemented with deployable t rusted workflow contracts. The workflow is contracted via agreements with the organizations of the block chain network and derived from Service bulletins or equivalent instruments. The smart contracts are defined and developed in compliance with regulatory requirements. The smart contracts may contain various sections of rules for configuring the procedure of the app such as the following: rules to assess applicability of parts for aircraft and specific hardware; rules to verify whether the software was correctly loaded into an approved and compatible target computer, and rules for post load verification and/or test procedures required to show compliance with the guidelines specified, for example by a certification n memorandum or like reference. The references may cover an approved LSAP loading procedure used or described with an Aircraft Flight Manual or Operations Manual of the aircraft, as appropriate for the particular maintenance.

In FIGS. 7A and 7B, a LSAP loading network with a semi-automated installation procedure of the orchestrating activities of multiple organizations for generating data with time stamps to the blockchain ledger of the LSAP Blockchain Network is illustrated. The Task Transactions based on workflow contracts will ensure the secure loading of LSAPs from a remote system. The work flow diagram 700 includes the list of tasks but it is contemplated that the particular list of tasks can be changed, modified or omitted as needed and the particular list described here is merely an exemplary list of tasks for a particular block chain network configuration. The work flow diagram 700 includes: a task 710 with a time stamp to request to install an LSAP; a task 720 with a time stamp to ready the network for the LSAP installation; a task 730 to authorize an LSAP loading; a task 740 with a time stamp to complete the installation; and a task 750 with a time stamp to create the block in the block chain network.

In various exemplary embodiments, a semi-automated installation procedure may be configured with a set of trusted agents (i.e. ground personnel) and begins with the LSAP software parts installer publishing the service bulletin for review and applicability as well as notification to the maintenance manager. A request at task 710 with a time stamp may include the maintenance manager creating 712 the work order for the LSAP module installation and a selected work procedure with checks is executed (via the app) for the maintenance technician. A task 720 with a time stamp to ready the network may include assigning to a maintenance technician a trigger for the software installation at the aircraft 722. A task 730 to authorize loading may include the aircraft notifying 732 at a particular time in accordance with a time stamp so that the maintenance technician knows when to trigger the loading process. A task 750 of completion may include the status 742 with a time stamp of the installation and a verification (i.e. check) of the installation with a time stamp determined by the inspector and in turn a notification with a time stamp is sent that the installation is complete to the maintenance manager, the pilot and the inspector views and can check the report generated by the maintenance technician of the installation. The report can include the sequence and checks of the tasks performed for the maintenance. Finally, when completed a block is created 752 to record the transaction in the digital ledger at task 750 with a time stamp.

In various exemplary embodiments, the blockchain ledger of task 750 may receive records of the service bulletin with the installation procedure configured with time stamps and store reports by the maintenance technician when completed of each step of the installation procedure. That is, software calls may be configured for sending various steps in the process for recordation with time stamps in record blocks which make up the blockchain ledger to retain a permanent record of all activities in a semi-automated LSAP installation procedure of software module updates.

In various embodiments, records of the data may be stored in the blocks of the blockchain ledger including times, dates, checks, order validation, and completion of the software module installations and updates in each step of the pipeline installation procedure for future review, searching and compliance data that the service bulletins have been received, the appropriate aircraft identified and installations of the software validated and properly completed.

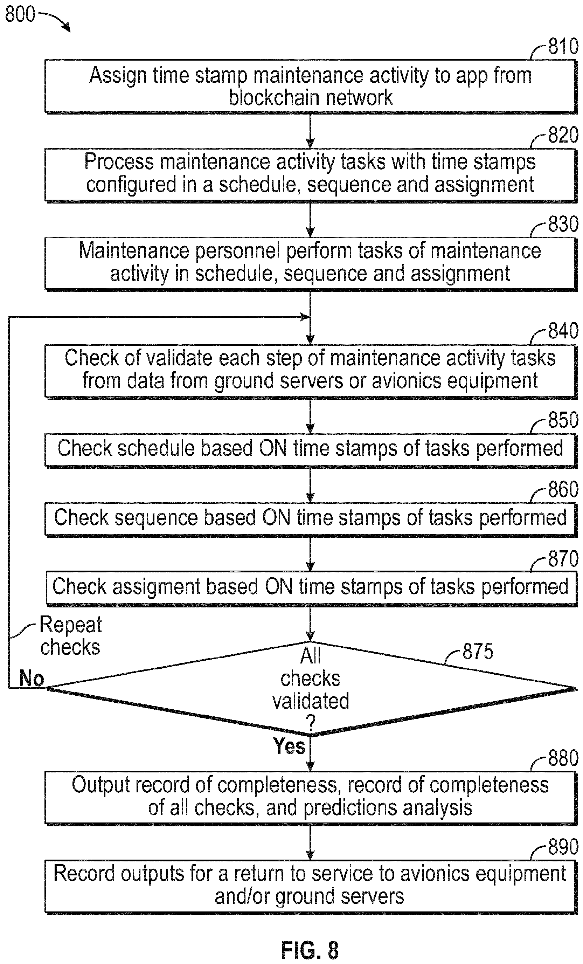

FIG. 8 illustrates a flowchart 800 for the maintenance workflow of activities assigned by a Blockchain Network in accordance with an embodiment. The Blockchain network at step 810 assigns a maintenance activity with a time stamp to ground personnel via an app. The assigned maintenance activity may be from a maintenance plan or may be as a result of an original equipment manufacturer (OEM)/supplemental type certificate (STC) release service bulletin that requires a maintenance repair or software update. At step 820, the maintenance activity is processed with the time stamp information using various processing tools and may generate a set of tasks, activity byte codes etc. At step 830, the generated set of tasks with time stamps are configured in a schedule, sequence/order and assignments. At step 840, the maintenance personnel perform tasks of the maintenance activity in accordance with the schedule, sequence/order and assignment. At step 840, a set of checks of the maintenance activity can be performed based on data from ground servers or avionics equipment and validated according to a regulatory (i.e. FAA) approved procedure. At step 850, a check of the schedule of the maintenance activity based on the time stamps of the tasks performed. At step 860, a check of the sequence of the maintenance activity based on the time stamps of the tasks performed. At step 870, a check of the assignment of the maintenance activity based on the time stamps of the tasks performed. In various embodiments, the checks and validations can be performed based on the Blockchain network rules and the time stamps information. At step 875, a determination is made is all the checks are validated. If not the flow cycles back and repeats the checking steps 840 to 870 until all checks are validated or resolved. Next, at step 880, an output is generated from the Blockchain network of a record of completeness of compliance, record of completeness of all checks and validations, and an analysis or prediction of the next service activity or activities. At step 890, a notice of a return to service for the aircraft may be issued by the app. The analysis and records are received by the ground servers and/or avionic systems for assigning activities such as updating (i.e. software), replacing parts etc.

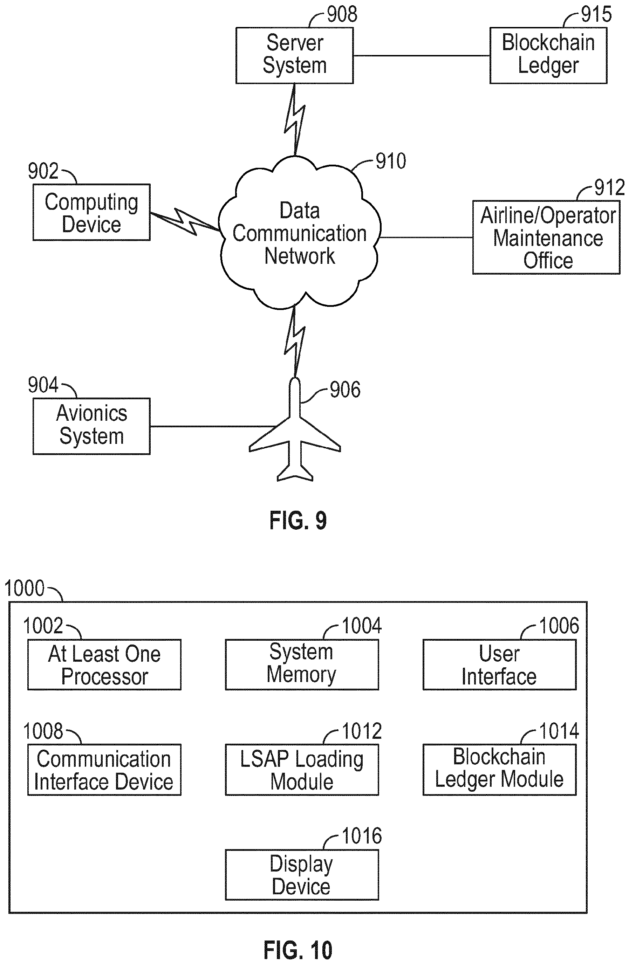

FIG. 9 is a network diagram of the Blockchain ledger with the communication network aircraft related to the maintenance activities for generating data to the Blockchain Network in accordance with an embodiment.

The network diagram 900 includes the server system 908 which, in instances, may include several server farms having blockchain ledgers 915 enabling access of the data by multiple parties. The aircraft 906 in communication via a data communication network 910 with the server system 908, the operator maintenance office 912 and a computing device 902 providing client access.

The computing device 902 may be implemented by any computing device that includes at least one processor, some form of memory hardware, a user interface, and communication hardware. For example, the computing device 902 may be implemented using a personal computing device, such as a tablet computer, a laptop computer, a personal digital assistant (PDA), a smartphone, or the like hosting a software application configured to be in communication (via a platform) with the Blockchain Network, ground servers and avionic equipment. In this scenario, the computing device 902 is capable of storing, maintaining, and executing a Blockchain Network applications associated with maintenance activities of clients and organizations based on time stamp data for example: loading LSAP software updates with the aircraft 906 avionic systems.

The aircraft 906 may be any aviation vehicle for which LSAP updates or other replacement parts are applicable in response to service notice bulletins. The aircraft 906 may be implemented as an airplane, helicopter, spacecraft, hovercraft, unmanned air vehicle, or the like. The one or more avionics systems 904 may include any system capable of receiving software updates via the communication systems of the aircraft.

The server system 908 may include any number of application servers, and each server may be implemented using any suitable computer. In some embodiments, the server system 908 includes one or more dedicated computers. In some embodiments, the server system 908 includes one or more computers carrying out other functionality in addition to server operations. The server system 908 may store and provide any type of executable applications and data that is compatible with the computing device 902 and is related to the updating of software updates as required by service bulletins for maintenance service of an aircraft. In addition, the server system 908 may store rules, procedures, requests etc... associated with entities of various nodes in the Blockchain Network for managing clients at the computing device 902.

The computing device 902 is usually located with the maintenance technician or onboard the aircraft 906, and the computing device 902 communicates with the one or more avionics systems on the aircraft 906 via wired and/or wireless communication connection. The computing device 902 and the server system 908 are generally disparately located, and the computing device 902 communicates with the server system 908 via the data communication network 910 and/or via communication mechanisms onboard the aircraft 906.

The data communication network 910 may be any digital or other communications network capable of transmitting messages or data between devices, systems, or parts. In certain embodiments, the data communication network 910 includes a packet switched network that facilitates packet-based data communication, addressing, and data routing. The packet switched network could be, for example, a wide area network, the Internet, or the like. In various embodiments, the data communication network 910 includes any number of public or private data connections, links or network connections supporting any number of communications protocols. The data communication network 910 may include the Internet, for example, or any other network based upon TCP/IP or other conventional protocols. In various embodiments, the data communication network 910 could also incorporate a wireless and/or wired telephone network, such as a cellular communications network for communicating with mobile phones, personal digital assistants, and/or the like. The data communication network 910 may also incorporate any sort of wireless or wired local and/or personal area networks, such as one or more IEEE 802.3, IEEE 802.16, and/or IEEE 802.11 networks, and/or networks that implement a short range (e.g., Bluetooth) protocol. For the sake of brevity, conventional techniques related to data transmission, signaling, network control, and other functional aspects of the systems (and the individual operating parts of the systems) may not be described in detail herein.

FIG. 10 is a functional block diagram of a computing device related to the orchestrated activities for generating data of the Blockchain Network in accordance with an embodiment. It should be noted that the computing device 1000 can be implemented with the computing device 902 depicted in FIG. 9. In this regard, the computing device 1000 shows certain elements and parts of the computing device 902 in more detail.

The computing device 1000 generally includes, without limitation: at least one processor 1002; system memory 1004; a user interface 1006; a communication interface device 1008; LSAP loading module 1012; a blockchain ledger module 1014 and a display device 1016. These elements and features of the computing device 1000 may be operatively associated with one another, coupled to one another, or otherwise configured to cooperate with one another as needed to support the desired functionality; in particular, the distributed ledger is used to obtain the digital service record into a first block of the blockchain ledger in the blockchain ledger module 1014 and to initiate at least one loading and installing activity performed upon the software embedded in the aircraft to effect updating using the distributable software code and to insert into the distributed ledger of the blockchain ledger module 1014 of a second block of the blockchain storing a record with time stamp data of loading and installing activity by the LSAP loading module 1012 is performed.

For ease of illustration and clarity, the various physical, electrical, and logical couplings and interconnections for these elements and features are not depicted in FIG. 10. Moreover, it should be appreciated that embodiments of the computing device 1000 will include other elements, modules, and features that cooperate to support the desired functionality. For simplicity, FIG. 10 only depicts certain elements that relate to the techniques described in more detail below.

The at least one processor 1002 may be implemented or performed with one or more general purpose processors, a content addressable memory, a digital signal processor, an application specific integrated circuit, a field programmable gate array, any suitable programmable logic device, discrete gate or transistor logic, discrete hardware parts, or any combination designed to perform the functions described here. In particular, the at least one processor 1002 may be realized as one or more microprocessors, controllers, microcontrollers, or state machines. Moreover, the at least one processor 1002 may be implemented as a combination of computing devices, e.g., a combination of digital signal processors and microprocessors, a plurality of microprocessors, one or more microprocessors in conjunction with a digital signal processor core, or any other such configuration.

The at least one processor 1002 is communicatively coupled to the system memory 1004. The system memory 1004 is configured to store any obtained or generated data associated with blockchain ledger of the blockchain ledger module 1014. The system memory 1004 may be realized using any number of devices, parts, or modules, as appropriate to the embodiment. Moreover, the computing device 1000 could include system memory 1004 integrated therein and/or a system memory 1004 operatively coupled thereto, as appropriate to the particular embodiment. In practice, the system memory 1004 could be realized as RAM memory, flash memory, EPROM memory, EEPROM memory, registers, a hard disk, a removable disk, or any other form of storage medium known in the art.

The user interface 1006 may include or cooperate with various features to allow a user to interact with the computing device 1000. Accordingly, the user interface 1006 may include various human-to-machine interfaces, e.g., a keypad, keys, a keyboard, buttons, switches, knobs, a touchpad, a joystick, a pointing device, a virtual writing tablet, a touch screen, a microphone, or any device, part, or function that enables the user to select options, input information, or otherwise control the operation of the computing device 1000.

In certain embodiments, the user interface 1006 may include or cooperate with various features to allow a user to interact with the computing device 1000 via graphical elements rendered on a display element (e.g., the display device 1016). Accordingly, the user interface 1006 may initiate the creation, maintenance, and presentation of a graphical user interface (GUI). In certain embodiments, the display device 1016 implements touch-sensitive technology for purposes of interacting with the GUI. Thus, a user can manipulate the GUI by moving a cursor symbol rendered on the display device 1016, or by physically interacting with the display device 1016 itself for recognition and interpretation, via the user interface 1006.

The communication interface device 1008 is suitably configured to communicate data between the computing device 1000 and one or more remote servers and one or more avionics systems onboard an aircraft. The communication interface device 1008 may transmit and receive communications over a wireless local area network (WLAN), the Internet, a satellite uplink/downlink, a cellular network, a broadband network, a wide area network, or the like. As described in more detail below, data received by the communication interface device 1008 may include, without limitation: data of the orchestrated activities by maintenance technician from issued service bulletins in clients per the rules formed by trusted workflow contracts of entities associated with nodes in servers in the Blockchain Network.

In various exemplary embodiments, each of the tasks is initiated by an automated agent/manual process in the network as transactions. The transactions associated with each task are verified by the contract rules which are in turn endorsing or validated by nodes in the network. Upon endorsement, each tasks or sets of task configures a block which is recorded as an immutable record in the body of the block of the block chain. An automated tamper proof records generation results in which every transaction in the network is recorded in the distributed ledger of the block chain. The ledger resides as the official maintenance record for a particular aircraft. The application software of any node in the network may depending on rights given enable a viewing of the records. In an exemplary embodiment, an inspector the FAA can perform a remote audit of the maintenance records by accessing the blockchain ledger associated with the particular aircraft without visiting the maintenance facility, and without having to inspect the aircraft in person to validate the accuracy of the record in the ledger.

Techniques and technologies may be described herein in terms of functional and/or logical block parts, and with reference to symbolic representations of operations, processing tasks, and functions that may be performed by various computing parts or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block parts shown in the figures may be realized by any number of hardware, software, and/or firmware parts configured to perform the specified functions. For example, an embodiment of a system or a part may employ various integrated circuit parts, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, although the schematic shown depicts one exemplary arrangement of elements, additional intervening elements, devices, features, or parts may be present in an embodiment of the depicted subject matter.

For the sake of brevity, conventional techniques related to signal processing, data transmission, signaling, network control, and other functional aspects of the systems (and the individual operating parts of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Some of the functional units described in this specification have been referred to as "modules" in order to more particularly emphasize their implementation independence. For example, functionality referred to herein as a module may be implemented wholly, or partially, as a hardware circuit include custom VLSI circuits or gate arrays, off-the-shelf semiconductors such as logic chips, transistors, or other discrete parts. A module may also be implemented in programmable hardware devices such as field programmable gate arrays, programmable array logic, programmable logic devices, or the like. Modules may also be implemented in software for execution by various types of processors. An identified module of executable code may, for instance, include one or more physical or logical modules of computer instructions that may, for instance, be organized as an object, procedure, or function. Nevertheless, the executables of an identified module need not be physically located together, but may include disparate instructions stored in different locations that, when joined logically together, include the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A blockchain network system for administering aircraft maintenance operations by managing replacement parts and updates to parts on an in-service aircraft using a blockchain ledger, comprising:
at least one processor deployed on one or more devices which comprise: a computing device, a server and an in-cockpit avionics, the one or more devices configured for permissioned use of an app programmed to implement a blockchain network by receiving instructions of assigning maintenance activities to perform updates or replacements of parts of an aircraft and for part tracking and part verification wherein the app is configured in-communication with the blockchain network, the computing device, the server and the in-cockpit avionics;
the at least one processor, instructed by a controller based on communications from the app, to implement at least one deployable workflow assigned by a blockchain ledger record which specifies a process based on time stamp data to assign, check, and ensure that a set of maintenance tasks is completed in accordance with a scheduled time and a sequence with an order based on the time stamp data and is validated by rules from the blockchain ledger for a maintenance activity;
the at least one processor, instructed by the controller based on communications from the app, to implement the set of maintenance tasks comprising: checking, scheduling, sequencing and assigning the set of maintenance tasks with time stamp data to maintenance personnel wherein each maintenance task is performed in a sequence of an order of execution and assignment of a start and end time for each maintenance task in accordance with time stamp data from the blockchain ledger;
the at least one processor, instructed by the controller based on communications from the app to generate requests to the blockchain ledger of the maintenance activity to check for a completeness of maintenance tasks, updates to a part record, or to predict a next maintenance check; and
the at least one processor employing the time stamp data from the blockchain ledger for managing notifications of updates and replacements of parts to maintenance personnel using the app.

2. The system of claim 1, further comprising:
a notice of a return to service for an aircraft is received by the app after completing of maintenance checks.

3. The system of claim 2, further comprising:
a set of rules of the blockchain ledger to regulate the maintenance activity and to enable ground personnel by use of the app configured in accordance with the set of rules to administer the maintenance activity and enable a record of validation.

4. The system of claim 3, wherein the record of validation is stored in the blockchain ledger.

5. The system of claim 4, wherein the maintenance personnel comprise: at least one or more of a set of agents for accessing the Blockchain Network of: a repository, an aircraft server, a maintenance mechanic, an inspector, a maintenance facility, an aircraft owner, an OEM, and a regulator.

6. The system of claim 5, further comprising:
an activity engine of the app for scheduling tasks for the maintenance activity assigned by the blockchain network wherein the maintenance tasks comprise: checking updates to parts or validating part replacements.

7. The system of claim 6, further comprising:
the blockchain ledger outputting a record of a next maintenance activity based at least on the time stamp data.

8. A system implementing a Blockchain Network for distributing at least maintenance information related to an aircraft service, the system comprises:
a plurality of computer devices permissioned to participate in the Blockchain Network and to interconnect amongst each other to perform a series of actions at least comprising: assigning, checking and ordering maintenance activities associated from instructions from the Blockchain Network;
an app hosted by at least one of the computer devices configured to communicate with the Blockchain Network wherein the computer devices comprise: a mobile device, a server and an in-cockpit avionics wherein the app is programmed to implement information from ledger records of the blockchain network containing instructions to assign maintenance activities, to perform updates and to perform replacements of parts of an aircraft with maintenance activities of part tracking and part verification;
the app hosted by the computer device configured to implement at least one deployable workflow assigned by the information of the ledger record which specifies a process based on time stamp data to assign, check, and ensure that a set of maintenance tasks is completed in accordance with a scheduled time and a sequence of an order based on the time stamp data and is validated by rules from the ledger record;
the app hosted by the computer device is configured to implement the set of maintenance tasks comprising: checking, scheduling, sequencing and assigning the set of maintenance tasks with time stamp data to maintenance personnel wherein each maintenance task is performed in a sequence of an order of execution and assignment of a start and end time for each maintenance task in accordance with time stamp data from the blockchain ledger;
the app hosted by the computer device is configured to generate requests to the blockchain ledger of the maintenance activity to check for a completeness of maintenance tasks, updates to a part record, or to predict a next maintenance check; and
the app hosted by the computer device is configured to manage the time stamp data from the blockchain ledger for notifications of updates and replacements of parts.

9. The system of claim 8, further comprising:
a notice of a return to service for an aircraft is received by the app after completing of maintenance checks.

10. The system of claim 9, further comprising:
a set of rules of the blockchain ledger to regulate the maintenance activity and to enable ground personnel by use of the app configured in accordance with the set of rules to administer the maintenance activity and enable a record of validation.
